(19) Europäisches Patentamt
European Patent Office
Office européen des brevets

(11) **EP 1 903 294 A1**

(12) **EUROPEAN PATENT APPLICATION**

(43) Date of publication:
26.03.2008 Bulletin 2008/13

(51) Int Cl.:
*F41G 7/22* (2006.01)   *G01S 3/783* (2006.01)
*G01S 7/483* (2006.01)   *G01S 7/481* (2006.01)

(21) Application number: 06120893.0

(22) Date of filing: 19.09.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: SAAB AB
581 88 Linköping (SE)

(72) Inventors:
• LINDGREN, Mikael
436 44, ASKIM (SE)
• KIHLÉN, Ralf
413 19, GÖTEBORG (SE)

(74) Representative: Norberg, Charlotte
Albihns Stockholm AB
P.O. 5581
114 85 Stockholm (SE)

(54) **Laser target seeker device**

(57)     The invention relates to a laser target seeker device arranged to receive a, from an object, reflected laser radiation, said device comprising detector means for detecting the reflected laser radiation (6), and processing means (50) arranged to determine the origin of the laser radiation (6) by means of said detector means, wherein the detector means comprises at least one position sensing detector, PSD (20; 30) for sensing the position of the reflected laser radiation. The invention further relates to a flyable body for finding a target by means of laser radiation. The invention still further relates to a system for finding a target by means of laser radiation.

Fig. 3

EP 1 903 294 A1

**Description**

TECHNICAL FIELD

The present invention relates to a laser target seeker device according to the preamble of claim 1. The present invention further relates to a flyable body, for example a missile, according to the preamble of claim 14. The present invention still further relates to a system according to the preamble of claim 15.

BACKGROUND

A common way of providing precision controlled weapons is to point at a target by means of a laser beam and allow a flyable weapon such as a missile, bomb or the like to guide itself towards the laser spot. Consequently a laser target seeker is required, being able to distinguish the reflected laser radiation in relation to the background. By laser target seeker a target seeker is intended, the task which is to detect reflected laser radiation from a target pointed out in the terrain by means of a laser designator and to determine the received radiation on the respective detector element in order to determine the origin of the laser radiation. The laser target seeker is also sometimes referred to as a semi-active laser sensor or a SAL-sensor.

The task of the target seeker is to inform where in the field of view of the target seeker the reflected laser spot is present. A common way of achieving this is to use a quadrant detector. A quadrant detector consists of four separate detector elements placed edge to edge in one plane, each of the detector elements being able to view a quadrant of a certain visual field. By measuring and comparing the signal intensity from the four quadrants, i.e. the amount of optical power ending up on each of the four elements, it is possible to determine where the point of balance of the laser reflection is located and thus in which direction to guide e.g. the missile. When the intensity of the signal is equally strong from all four elements the laser reflection is in the centre of the detector and the missile will hit in the middle of the laser reflex. A problem with the quadrant detector is that the accuracy is quite low, which might lead to the missile or the like missing the target.

If a higher accuracy is required in designating the target, the reflex may be focused to an area smaller than the quadrant detector. Then the centre point may be found with higher accuracy but when the reflex is located outside the centre it is not possible to determine how far from the centre it is. This leads to a guide operation which sometimes is referred to as "bang-bang", i.e. strikes are made between the end positions until the reflected beam is in the centre region, at which point a better control may be provided. This means however that a pour aim of the target is the case until the reflex is in the centre. Before that only the quadrant in which the target is located is known.

A more advanced alternative is to use a two dimensional matrix of detector elements to view the entire field of view, e.g. a detector matrix having $4 \times 4$ elements. The laser reflex will hit one or more of the elements. By comparing the intensities of the signals the position where the reflection is located may be calculated. An advantage is that a more precise determination of the position of the target in the field of view is achieved. It is also possible to create multiple "images" taken one after the other and to use image processing routines to follow and chose among target candidates.

The pointing out of the target is carried out by means of short laser pulses in the range of 10-20 ns. The quadrant detector has the advantage that it is easy to design in such a way that it becomes fast enough to be able to handle such pulses. The quadrant detector however has the drawback that the possibility of tracking the target is limited as it does not give a detailed image of the field of view. If high resolution is desired a two dimensional matrix of detector elements, e.g. photo diodes, is required, where the resolution increases with the number of detector elements. A disadvantage is that such a detector matrix is relatively expensive, costs increasing with the number of detector elements, i.e. with increased resolution.

A common CCD-camera is not possible to use as it is not fast enough to handle the short pulses in the range of 10-20 ns.

OBJECTS OF THE INVENTION

One object of the present invention is to provide a laser target seeker with high accuracy which is relatively cheap.

Another object of the present invention is to provide a flyable body, for example a missile, for finding a target by means of reflected laser radiation with improved accuracy.

A further object of the present invention is to provide a system for finding a target by means of reflected laser radiation with improved accuracy,

SUMMARY OF THE INVENTION

These and other objects, apparent from the following description, are achieved by a laser target seeker device, a flyable body and a system, which are of the type stated by way of introduction and which in addition exhibits the features recited in the characterising clause of the appended claims 1, 14 and 15. Preferred embodiments of the inventive laser target seeker device are defined in appended subclaims 2-13.

Particularly an object is achieved by a laser target seeker device arranged to receive a, from an object, reflected laser radiation, said device comprising detector means for detecting the reflected laser radiation, and processing means arranged to determine the origin of the laser radiation by means of said detector means, wherein the detector means comprises at least one position sensing detector, PSD, for sensing the position of the reflected laser radiation. This has the advantage that a high accuracy is achieved, and that the accuracy is only dependant on the intensity of the signal, i.e. the accuracy increases as the distance to the target decreases. Moreover, such a detector is cheaper to manufacture in comparison to a detector matrix, especially when high accuracy is desired, i.e. when many detector elements are required in the matrix. In addition it provides outstanding resolution, fast response and excellent linearity. An advantage is that it does not matter if the laser radiation hits the edge or the middle of the detector surface, the same accuracy is achieved in any case. Compared to a detector matrix, where the amplifiers need to be the same in order to receive satisfactory results when differences in the respective detector element are measured, the device according to the present invention only needs one component, i.e. the PSD. Further, a quadrant detector or detector matrix need a controllable platform, i.e. the accuracy is only satisfactory when the detector matrix is guided towards the centre. When applied in a flying body, e.g. a missile, either the flying body needs to be turned in order to point the detector, or the detector is arranged in such a way in the nose of the flying body, that it may be turned, i.e. a controllable platform. Another advantage is that a PSD is smaller than a detector matrix, which means that it needs less space.

Preferably the detector means comprises a 2-dimensional PSD, which has the advantage that the position of the laser radiation is sensed in two dimensions.

Alternatively the detector means comprises a first 1-dimensional PSD and a second 1-dimensional PSD arranged relative to the first PSD such that the first PSD senses the position of the laser radiation (6) in the x-direction and the second PSD senses the laser radiation (6) in the y-direction. This is an alternative of sensing the laser radiation in 2-dimensions, using only 1-dimenstional PSDs.

Preferably the PSD comprises means for converting the incident laser radiation into continuous position data.

Preferably filter means is arranged to filter superfluous light such that substantially only light in the range of the laser light wavelength is detected. In this way the accuracy is increased as there is no disturbance from light other than laser light.

Preferably said filter means comprises a narrow-banded band pass filter arranged in front of the detector. This makes the detector blind for all light except light in the laser light wavelength, thus increasing the accuracy.

Preferably the processing means is arranged to compensate non-linearity of the output signal. This provides a more accurate result.

Preferably the device further comprises means for controlling the intensity of the laser radiation. In this way it is possible to supply power levels to the detector such that the detector may maintain its properties, i.e. the intensity of the laser radiation is controlled as the target seeker approaches the target such that the intensity does not increase to a level which the detector is not able to handle. The detector is thus able to handle both weak radiation signals occurring at long distances from the target and strong signals occurring at short distances to the target. The output signal from the detector is kept linear. Further the electronics of the processing means may be protected in this way.

Preferably the means for controlling the intensity of the laser radiation comprises a secondary PSD, the secondary PSD being arranged to receive laser radiation transmitted through the primary PSD. In this way the electronics of the processing means is protected.

Preferably attenuating means is arranged to attenuate the laser radiation prior to being received by the secondary PSD. This gives a more efficient protection of the electronics of the processing means.

Preferably means for deactivating the primary PSD as the primary PSD becomes overloaded. In this way the primary PSD is protected. Further the accuracy is increased as possible non-linearity of the primary PSD is avoided.

Preferably the means for controlling the intensity of the laser radiation comprises an electrically controllable element arranged in the laser radiation path. This provides an efficient way of controlling the intensity of the laser radiation.

Preferably the electrically controllable element comprises a window of liquid crystal arranged such that the laser radiation is transmitted there through, said transmission being controlled by means of an electric voltage.

Another object is achieved by a flyable body, for example a missile, grenade or the like, for hitting a target by means of a from said target reflected laser radiation comprising the laser target seeker device according to above, the device being arranged to guide the body towards the target by means of said laser radiation.

Yet another object is achieved by a system for hitting a target by means of a from said target reflected laser radiation, comprising a laser designator for pointing out said target by means of laser radiation, and a flyable body according to above.

DESCRIPTION OF THE DRAWINGS

A better understanding of the present invention will be had upon the reference to the following detailed description when read in conjunction with the accompanying drawings, wherein like reference characters refer to like parts throughout the several views, and in which:

Fig. 1 schematically shows a perspective view of a system according to the present invention comprising a laser designator for pointing at an object, and a flyable body for striking said object by means of the from the object reflected laser radiation;

Fig. 2 schematically shows a side view of the flying body in fig. 1, according to the present invention;

Fig.3 schematically shows a perspective view of a portion of the system in fig. 1;

Fig. 4 schematically shows a sectional view of a position sensing detector;

Fig. 5 schematically shows a perspective view of a 1-dimensional position sensing detector; and

Fig. 6 schematically shows a perspective view of a 2-dimensional position sensing detector.

DETAILED DESCRIPTION OF THE INVENTION

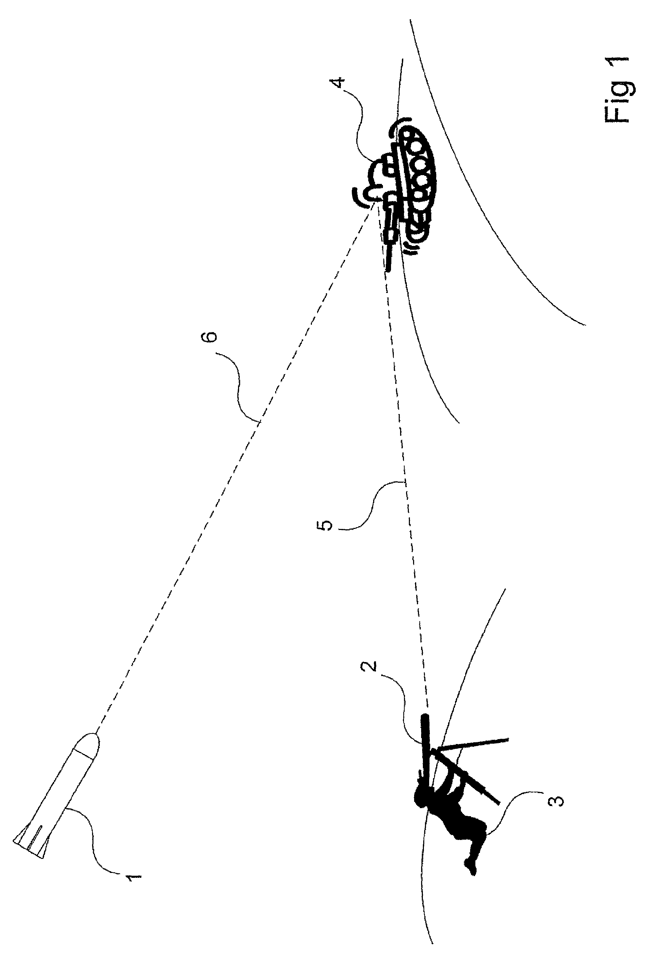

Fig. 1 shows schematically a perspective view of a system according to the present invention comprising a laser designator 2 for pointing a laser beam 5 at and illuminating an object 4, and a flyable body 1, for example a missile, for finding said object 4 by means of the from the object reflected laser radiation 6. An operator .3 has a laser generator which provides a laser beam 5 with which the operator illuminates the target. A flyable body 1, for example a missile 1, is fired from a launcher (not shown) and a laser target seeker device arranged in the missile detects the reflected laser radiation 6 from the target by means of a detector. The missile homes on such reflected illumination by means of the laser target seeker device, intercepts and destroys the target.

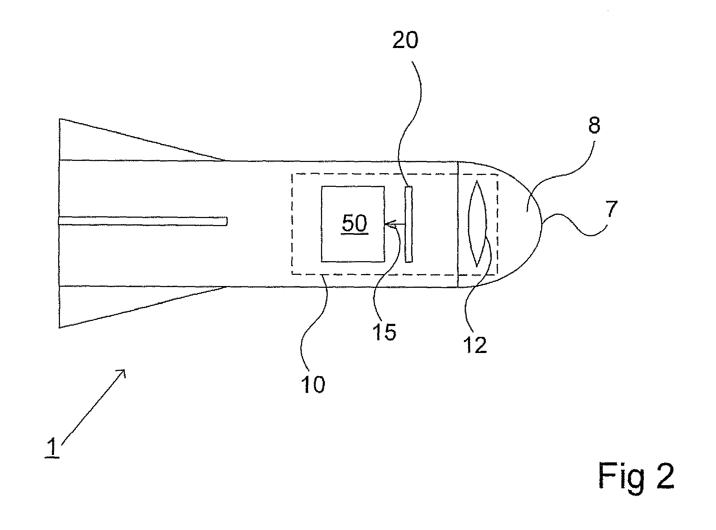

Fig. 2 shows schematically a side view of the flying body in fig. 1, according to the present invention. The flying body 1 comprises a front side 7 with a window 8 or aperture. The flying body 1 comprises a laser target seeker 10 arranged within said body 1. The laser target seeker device 10 preferably comprises an optical member, for example a lens member 12 provided in the area of the front end 7 of the body 1 at the window 8 for focusing a from an object/ a target reflected laser radiation 6, a detector member 20, 30 arranged to detect the reflected laser radiation 6, processing means 50 arranged to determine the received radiation on the detector member in order to determine the origin of the laser radiation 6.

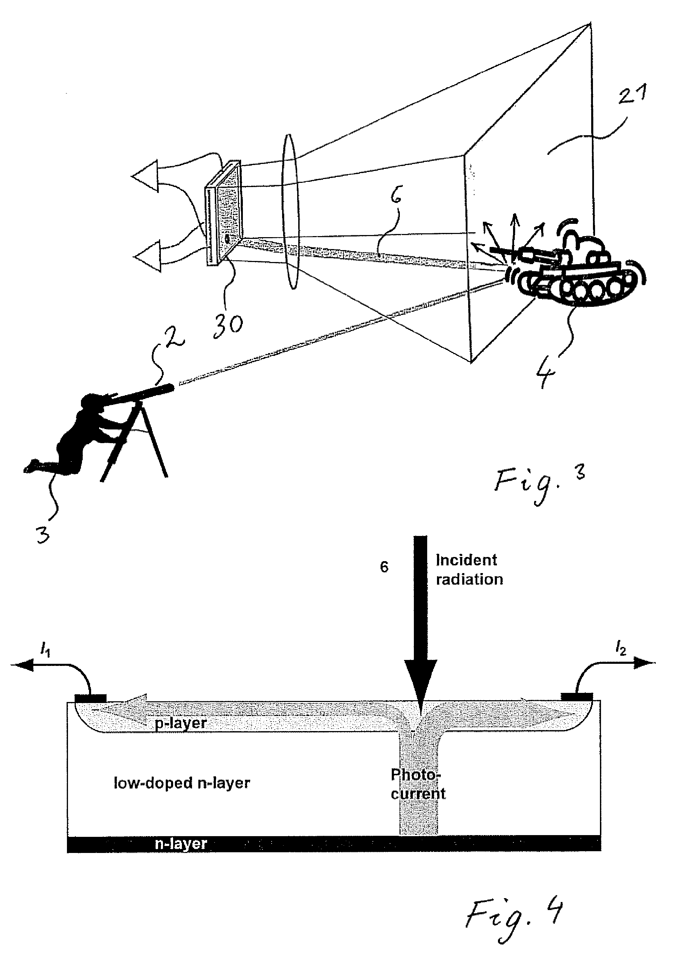

In accordance with fig. 1, fig. 3 shows schematically a perspective view of the laser designator 2 for pointing a laser beam 5 at and illuminating an object 4, and a portion of the flyable body 1, for example a missile, for finding said object 4 by means of the from the object reflected laser radiation 6. An operator 3 has a laser generator which provides a laser beam 5 with which the operator illuminates the target. The portion of the flyable body comprises the detector member 20, 30, the detector member being constituted by a position sensing detector (PSD) 20, 30 and the lens member arranged to diffract the laser radiation 6 to the detector. The field of view 21 of the detector is illustrated as a square increasing in size towards the target 4.

A position sensing detector, PSD, is an opto-electronic device which is arranged to convert an incident light spot into continuous position data. The PSD is a silicon photodiode that provides an analogue output directly proportional to the position of a light spot on the active area of the detector. A position sensing detector is known in the art, and is manufactured by e.g. Sitek.

Fig. 4 schematically shows a sectional view of a position sensing detector (PSD) illustrating the general principle of a PSD. The Position Sensing Detector consists of n-type silicon substrate with two resistive layers separated by a p-n junction. The front side has an ion implanted p-type resistive layer with two terminals or contacts at opposite ends. The back side has an ion implanted n-type resistive layer with two terminals at opposite ends placed orthogonally to the terminals on the front side. On a single axis PSD the electrodes are placed at opposite ends of the p-type resistive layer. A light spot within the spectral range of silicon will generate a photocurrent which flows from the incident point through the resistive layers to the electrodes. The resistivity of the ion implanted layer is extremely uniform so the photogenerated current at each electrode is inversely proportional to the distance between the incident spot of light and electrodes. A processing means takes the photocurrent from each electrode and processes the signals to give X, Y outputs independent of light intensity. Here two currents are generated, I l and 12. The difference between the currents is proportional to the position in such a way that a higher current is generated at the terminal being closest to the light spot.

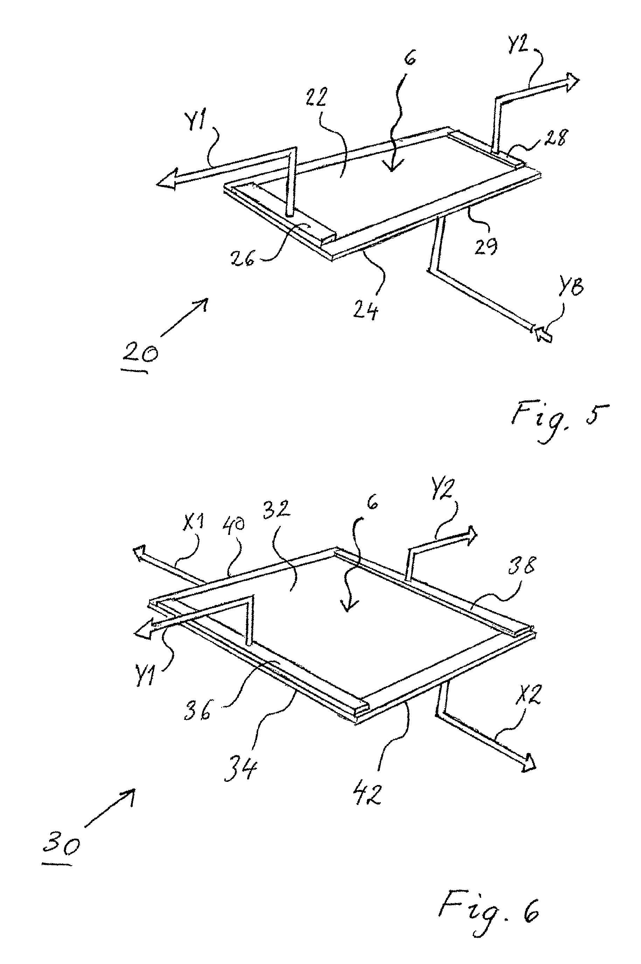

Fig. 5 shows a perspective view of a 1-dimensional PSD in accordance with a PSD manufactured by Sitek. The one-dimensional PSD 20 is arranged to detect a light spot 6 moving over its surface in one dimension (a straight line). The 1-dimensional PSD has a front side 22 and a back side 24. The 1-dimensional PSD comprises a first terminal 26 and a second terminal 28 arranged on the front side 22 at a distance from each other, preferably in the peripheral area of the front side, substantially opposite each other. The 1-dimensional PSD further comprises a third terminal 29, or a bias terminal 29, arranged on the back side 24 of the 1-dimensional PSD. A photoelectric current is generated by the incident light and flows through the device and can be seen as an input bias current YB divided into two output currents (see also fig. 4), Y1 and Y2. The relationship between these two output currents gives the light spot position through the formula:

$$Position = \frac{L}{2} \cdot \frac{Y_1 - Y_2}{Y_1 + Y_2}$$

where L is equal to the length of the PSD. With this equation the intensity of the incident light spot does not affect the calculation of the light spot position. A 1-dimensional PSD only gives the position in one dimension, i.e. in one direction, which is not preferable for a laser target seeker. Consequently a 2-dimensional PSD is preferred.

Fig. 6 schematically shows a perspective view of a two-dimensional PSD 30 according to a PSD manufactured by Sitek, which is able to detect a light spot moving over its surface in two dimensions. The duo-lateral PSD, has a front side 32 and a backside 34. The 2-dimensional PSD comprises a first terminal 36 and a second terminal 38 arranged on the front side 32 at a distance from each other, preferably in the peripheral area of the front side, substantially opposite each other. The PSD further comprises a third terminal 40 and a fourth terminal 42 arranged on the back side 34, preferably in the peripheral area, substantially opposite each other, and substantially perpendicular to the first and second terminal on the front side of the PSD. The photoelectric current generated by the incident light is arranged to flow through the device and can be seen as two input currents, X1 and X2, and two output currents, Y 1 and Y2. The relationship between the currents gives the light spot position through the formulas

$$Position = \frac{Ly}{2} \cdot \frac{Y_1 - Y_2}{Y_1 + Y_2} \qquad\qquad Position = \frac{Lx}{2} \cdot \frac{X_1 - X_2}{X_1 + X_2}$$

where Ly and Lx is equal to the length of the PSD in the Y and X dimensions respectively. With these equations the intensity of the incident light spot does not affect the calculation of the light spot position. The separation of the two dimensions ensures excellent linearity.

The PSD is then arranged to provide two signals which are proportional to the position of the laser spot in the field of view, the x- and y-coordinates. These signals are used, by means of the processing means, to guide the flying body 1, e.g. a missile, grenade or the like, towards the target 4, by executing control commands wherein the laser spot is brought to the centre of the field of view,

The size of the PSD is preferably in the range of mm$^2$.

According to an alternative embodiment of the present invention, instead of a 2-dimensional PSD 30, a first and a second 1-dimensional PSD 20 is provided, the first and second PSD 20 being arranged relative each other in such a way that the second PSD 20 is turned substantially 90° relative to the first PSD 20, such that e.g. the first PSD 20 gives the position in the x-direction and the second PSD 20 gives the direction in the y-direction. Said information is then provided to the processing means in order to determine the origin of the laser radiation 6.

The laser target seeker device 10 according to the invention comprises means for filtering incident light except light in the range of laser wavelength. Preferably the means comprises narrow-banded band pass filter arranged in front of the detector 30 making the detector blind for all incident light except laser. As the field of view is depicted on the detector it perceives a light spot in a position corresponding to the position of the laser spot in the field of view. The detector 30 is arranged to signal the position. The position signal from the detector is preferably used as a guide signal for e.g. maintaining the laser spot in the centre of the field of view, leading the carrier, i.e. the laser target seeker device to hit the illuminated target.

There are some aspects which need to be addressed regarding the use of a PSD. In order to manage detection at both long distances, e.g. in the range of 1-3 km, and short distances, e.g, in the range of 5-15 m, the dynamic range of the detector has to be relatively large. This means that the detector has to be configured to withstand and manage powers of the reflected laser radiation in the range of μW for long distances up to W for short distances, the configuration substantially not affecting the properties of the PSD. In order to detect the reflected laser radiation at long distances, e.g. km, powerful amplifiers are required, as well as a low noise level. At short distances switching means are required to switch the amplifier such that amplification is reduced.

One option for dealing with the radiation power is to design the detector such that it is not destroyed by too high power, i.e. laser radiation of high intensity, and means for compensating for non-linear output signal, said means e.g, being signal processing means.

The PSD is insensitive to exact focusing of the radiation, hence several PSDs may be placed behind each other. Another option for coping with high signal levels is thus to provide a secondary PSD arranged in the same beam path as the primary PSD, said secondary PSD preferably comprising an attenuating filter for attenuating the signal level. In this way the fact that a certain portion of the radiation is transmitted straight through the primary PSD is utilized. The secondary PSD is arranged straight behind, i.e. downstream, of the primary PSD. The secondary PSD is arranged to be activated as the primary PSD becomes overloaded. Preferably both PSDs may be activated during a, relatively large, transition phase, providing a redundant system. As mentioned above additional PSDs may be placed behind the secondary PSD in the beam path.

Alternatively limitation of the dynamics may also be provided by means of an electrically controllable element arranged in the beam path. In an embodiment a window of liquid crystal is arranged such that the radiation is transmitted there through. The transmission of the radiation through the window of liquid crystal is arranged to be controlled in a fast manner by means of an electric voltage. Due to the fact that the wavelength of the searched signal is well defined and spectrally small, the transmission in the shut-off position, i.e. maximum transmission, may be achieved close to 100%.

In order to limit the dynamic range of the electronics attached to the PSD the laser target seeker according to the invention preferably is provided with means for automatic regulation of the input radiation power at short target distances.

Another issue which needs to be addressed is the signal-to-noise ratio.

Another issue which needs to be addressed is all the superfluous light which needs to be filtered such that only the laser light reaches the detector. A direct sun reflex may give a signal having a radiation power of approximately two orders of magnitude higher than the laser light, which sun reflex needs to be removed from the laser reflection. An example of achieving this is to use the fact that the laser reflex is transitory while the sun reflex is continuous.

Above examples of PSDs according to Sitek have been given. These are to be seen as mere examples of PSDs explaining the general principle and giving examples of embodiments thereof Of course any kind of PSD fulfilling the above requirements may be used in the laser target seeker according to the present invention.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. A laser target seeker device arranged to receive, from an object, reflected laser radiation (6), said device comprising detector means for detecting the reflected laser radiation (6), and processing means (50) arranged to determine the origin of the laser radiation (6) by means of said detector means, **characterised in that** the detector means comprises at least one position sensing detector, PSD (20; 30) for sensing the position of the reflected laser radiation (6).

2. A device according to claim 1, wherein the PSD comprises means for converting the incident laser radiation into continuous position data.

3. A device according to claim 1 or 2, wherein the detector means comprises a 2-dimensional PSD (30).

4. A device according to claim 1 or 2, wherein the detector means comprises a first 1-dimensional PSD (20) and a second 1-dimensional PSD (20) arranged relative to the first PSD such that the first PSD senses the position of the laser radiation (6) in the x-direction and the second PSD senses the laser radiation (6) in the y-direction.

5. A device according to any preceding claim, wherein filter means is arranged to filter superfluous light such that substantially only light in the range of the laser light wavelength is detected.

6. A device according to claim 5, wherein said filter means comprises a narrow-banded band pass filter arranged in front of the PSD.

7. A device according to any preceding claim, wherein the processing means (50) is arranged to compensate non-linearity of the output signal,

8. A device according to any preceding claim, further comprising means for controlling the intensity of the laser radiation.

9. A device according to claim 8, wherein the means for controlling the intensity of the laser radiation comprises a secondary PSD (20, 30), the secondary PSD being arranged to receive laser radiation transmitted through the primary PSD (20, 30).

10. A device according to claim 9, wherein attenuating means is arranged to attenuate the laser radiation prior to being received by the secondary PSD (20, 30).

11. A device according to claim 9 or 10, comprising means for deactivating the primary PSD as the primary PSD becomes overloaded,

12. A device according to anyone of claims 8-11, wherein the means for controlling the intensity of the laser radiation comprises an electrically controllable element arranged in the laser radiation path.

13. A device according to claim 12, wherein the electrically controllable element comprises a window of liquid crystal arranged such that the laser radiation is transmitted there through, said transmission being controlled by means of an electric voltage.

14. A flyable body, for example a missile, grenade or the like, for finding a target by means of a from said target reflected laser radiation comprising the laser target seeker device according to any one of claims 1-1.3, the device being arranged to guide the body towards the target by means of said laser radiation.

15. A system for finding a target by means of a from said target reflected laser radiation, comprising a laser designator for pointing out said target by means of a laser beam, and a flyable body according to claim 14.

Fig 1

Fig 2

*Fig. 3*

21

6

30

2

4

3

6    Incident radiation

$I_1$

$I_2$

p-layer

low-doped n-layer

Photo-current

n-layer

*Fig. 4*

Fig. 5

Fig. 6

European Patent
Office

**EUROPEAN SEARCH REPORT**

Application Number

EP 06 12 0893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2005/279913 A1 (THOLL HANS D [DE] ET AL) 22 December 2005 (2005-12-22)<br>* abstract *<br><br>* paragraphs [0001] - [0004], [0007], [0016], [0025], [0026] *<br>----- | 1-3,7,<br>14,15<br>4-6,8,<br>12,13 | INV.<br>F41G7/22<br>G01S3/783<br>G01S7/483<br>G01S7/481 |
| Y | US 5 559 322 A (JACOBY JEROLD L [US] ET AL) 24 September 1996 (1996-09-24)<br>* abstract; figures *<br>----- | 4 | |
| Y<br><br>A | US 2006/108499 A1 (FORTIN JEAN [CA] ET AL) 25 May 2006 (2006-05-25)<br>* abstract *<br>* paragraphs [0004], [0005], [0020] - [0024] *<br>----- | 5,6,8,12<br><br>13 | |
| Y<br><br>A | US 4 939 369 A (ELABD HAMMAM [US]) 3 July 1990 (1990-07-03)<br>* abstract; figures *<br>* column 4, line 7 - line 64 *<br>----- | 5,6<br><br>8,9 | |
| Y<br><br>A | EP 1 160 549 A (MINI OF NAT DEFENCE OF BR HER [CA] SECR DEFENCE BRIT [CA]) 5 December 2001 (2001-12-05)<br>* abstract; figures *<br>* paragraph [0013] *<br>----- | 5,6,8,<br>12,13<br><br>1 | TECHNICAL FIELDS SEARCHED (IPC)<br><br>G01S<br>F41G |
| A | US 6 462 326 B1 (CLEAVER AARON K [US]) 8 October 2002 (2002-10-08)<br>* abstract *<br>* column 1, line 42 - line 67 *<br>----- | 1 | |

The present search report has been drawn up for all claims

| Place of search | Date of completion of the search | Examiner |
|---|---|---|
| The Hague | 19 April 2007 | Roost, Joseph |

EPO FORM 1503 03.82 (P04C01)

## ANNEX TO THE EUROPEAN SEARCH REPORT
## ON EUROPEAN PATENT APPLICATION NO.

EP 06 12 0893

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2007

| Patent document cited in search report | | Publication date | Patent family member(s) | | Publication date |
|---|---|---|---|---|---|
| US 2005279913 | A1 | 22-12-2005 | DE 102004029343 A1<br>FR 2872892 A1<br>GB 2415310 A | | 05-01-2006<br>13-01-2006<br>21-12-2005 |
| US 5559322 | A | 24-09-1996 | NONE | | |
| US 2006108499 | A1 | 25-05-2006 | NONE | | |
| US 4939369 | A | 03-07-1990 | NONE | | |
| EP 1160549 | A | 05-12-2001 | US 6433330 B1 | | 13-08-2002 |
| US 6462326 | B1 | 08-10-2002 | NONE | | |

EPO FORM P0459

For more details about this annex : see Official Journal of the European Patent Office, No. 12/82